# EUROPEAN PATENT SPECIFICATION

(11) **EP 2 524 830 B1**
(45) Date of publication and mention of the grant of the patent: **30.04.2014**
(21) Application number: 11732871.6
(22) Date of filing: 12.01.2011
(51) Int. Cl.: B60H 1/22, B60H 1/32, B60H 1/00

(54) **AIR CONDITIONING SYSTEM FOR VEHICLE**
KLIMAANLAGENSYSTEM FÜR EIN FAHRZEUG
SYSTÈME DE CLIMATISATION POUR VÉHICULE

(30) Priority: 15.01.2010 JP 2010007118; 12.01.2010 JP 2010004299
(43) Date of publication of application: 21.11.2012
(73) Proprietor: Honda Motor Co., Ltd., Minato-ku Tokyo 107-8556 (JP)
(72) Inventor: ENDO, Hiroshi, Wako-shi Saitama 351-0193 (JP); YAMAOKA, Daisuke, Wako-shi Saitama 351-0193 (JP); ESAKI, Hidenori, Wako-shi Saitama 351-0193 (JP); KIMURA, Kenzo, Wako-shi Saitama 351-0193 (JP); YAMAMOTO, Chisato, Wako-shi Saitama 351-0193 (JP)
(74) Representative: Herzog, Markus
(86) International application number: PCT/JP2011/050300
(87) International publication number: WO 2011/087001

(56) References cited:
- DE-A1- 10 350 192
- JP-A- 6 135 221
- JP-A- 7 280 362
- JP-A- 8 276 720
- JP-A- H07 280 362
- JP-A- 2000 043 562
- JP-A- 2000 043 562
- JP-A- 2004 148 966
- JP-A- 2004 148 966
- US-A1- 2009 113 913

## Description

### Technical Field

The present invention relates to a vehicular air conditioning system incorporated in a vehicle for air-conditioning a passenger cabin of the vehicle.

### Background Art

Vehicles, e.g., engine automobiles having an internal combustion engine, hybrid automobiles having an engine and a secondary battery (or a secondary battery and a fuel cell or the like) in combination, electric automobiles, and fuel cell automobiles, incorporate various types of vehicular air conditioning systems.

For example, as shown in FIG. 19, a vehicular air conditioning apparatus, as disclosed in Japanese Laid-Open Patent Publication No. 2009-023564, includes a compressor 1 for drawing in and discharging a refrigerant, a condenser 3 disposed in an air conditioning unit case 2 for heating air through heat exchange between the air and the refrigerant that is discharged from the compressor 1 in a heating mode, a receiver 4 for receiving the refrigerant flowing in from the condenser 3 and performing gas-liquid separation in the heating mode, a supercooler 5 for supercooling the liquid refrigerant that flows in from the receiver 4 through heat exchange between the liquid refrigerant and ambient air in the heating mode, a depressurizer 6 for depressurizing the refrigerant that has been supercooled by the supercooler 5 in the heating mode, and an outdoor heat exchanger 7 for evaporating the refrigerant depressurized by the depressurizer 6 in the heating mode.

With the above vehicular air conditioning apparatus, subcooling (i.e., a degree of subcooling) is achieved by the receiver 4, and further is additionally achieved reliably by the supercooler 5, which is disposed downstream of the receiver 4, using ambient air in the heating mode. The vehicular air conditioning apparatus is rendered highly efficient and excellent in heating performance through a relatively simple cyclic arrangement.

According to Japanese Laid-Open Patent Publication No. 2009-023564, the receiver 4 and the supercooler 5 are used only in the heating mode, and thus, the receiver 4 and the supercooler 5 are not required in a cooling mode. Therefore, the number of components dedicated to the heating mode is increased, which makes the vehicular air conditioning apparatus uneconomical.

According to Japanese Laid-Open Patent Publication No. 2009-023564, furthermore, the vehicular air conditioning apparatus does not include a buffer in order to make up for a refrigerant shortage in the case that the cooled liquid refrigerant remains trapped in the outdoor heat exchanger 7, and the amount of refrigerant used for air-conditioning the vehicle is reduced in the cooling mode. Consequently, air-conditioning performance is lowered due to the refrigerant shortage, resulting in the need for a power increase caused by a capability shortage of the compressor 1, and also resulting in poor mileage on account of the power increase.

Another known vehicular air-conditioning system is disclosed in US 2009/0113913 A1, which is considered as the closest prior art.

### Summary of Invention

The present invention has been made in order to solve the aforementioned problems. It is an object of the present invention to provide a vehicular air conditioning system, which is capable of increasing heat exchange efficiency and maintaining good air-conditioning performance as a result of stably circulating a refrigerant by means of a simple and economical arrangement.

According to the present invention, there is provided a vehicular air conditioning system of the heat pump type according to the features of independent claim 1.

According to the present invention, the gas-liquid separation refrigerant storage unit functions as a buffer for making up or compensating for a refrigerant shortage in a cooling mode. Therefore, when the air conditioning system operates in the heating mode at an increased ambient air temperature, as well as when the air conditioning system operates in a transient mode such as a dehumidifying heating mode, no refrigerant shortage occurs, thereby allowing the air conditioning system to perform air-conditioning in a stable manner.

In the heating mode, the heater, the gas-liquid separation refrigerant storage unit, and the supercooling heat exchanger are connected in bypassing relation to the condenser. Consequently, the gas-liquid separation refrigerant storage unit functions as a subcooling tank. As a result, liquid refrigerant, which is produced upon separation of gas contained in the refrigerant, flows through the supercooling heat exchanger (subcooling condenser) and is cooled to an ambient air temperature range. Accordingly, there is no need to provide a subcooling tank and a subcooler, which would be used only in the heating mode.

It is thus possible to increase heat exchange efficiency and to maintain good air-conditioning performance by stably circulating the refrigerant by means of a simple and economical arrangement.

### Brief Description of Drawings

FIG. 1 is a schematic block diagram of a vehicular air conditioning system according to a first embodiment of the present invention;
FIG. 2 is a schematic view showing the manner in which the vehicular air conditioning system operates in a heating mode;
FIG. 3 is a diagram showing a cycle on a Mollier chart plotted when the vehicular air conditioning system operates in the heating mode;
FIG. 4 is a schematic view showing the manner in which the vehicular air conditioning system operates in a dehumidifying heating mode;
FIG. 5 is a schematic view showing the manner in which the vehicular air conditioning system operates in a cooling mode;
FIG. 6 is a schematic block diagram of a vehicular air conditioning system according to a second embodiment of the present invention;
FIG. 7 is a diagram showing a cycle on a Mollier chart plotted when the vehicular air conditioning system operates in a heating mode;
FIG. 8 is a schematic block diagram of a vehicular air conditioning system according to a third embodiment of the present invention;
FIG. 9 is a schematic block diagram of a vehicular air conditioning system according to a fourth embodiment of the present invention;
FIG. 10 is a schematic view showing the manner in which the vehicular air conditioning system operates in a heating mode;
FIG. 11 is a schematic view showing the manner in which the vehicular air conditioning system operates in a dehumidifying heating mode;
FIG. 12 is a schematic view showing the manner in which the vehicular air conditioning system operates in a cooling mode;
FIG. 13 is a schematic block diagram of a vehicular air conditioning system according to a fifth embodiment of the present invention;
FIG. 14 is a schematic view showing the manner in which the vehicular air conditioning system operates in a cooling mode;
FIG. 15 is a schematic block diagram of a vehicular air conditioning system according to a sixth embodiment of the present invention;

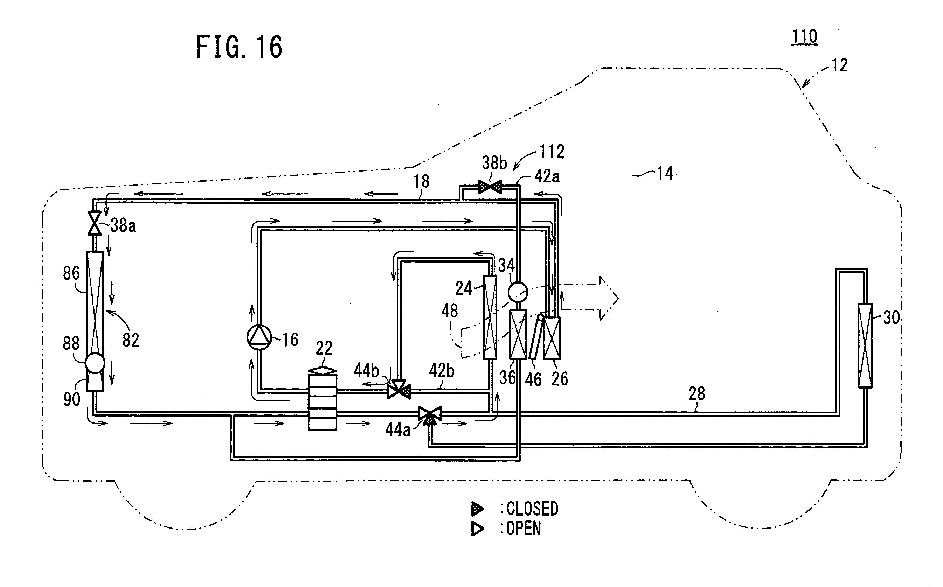

FIG. 16 is a schematic view showing the manner in which the vehicular air conditioning system operates in a cooling mode;
FIG. 17 is a schematic block diagram of a vehicular air conditioning system according to a seventh embodiment of the present invention;
FIG. 18 is a schematic block diagram of a vehicular air conditioning system according to an eighth embodiment of the present invention; and

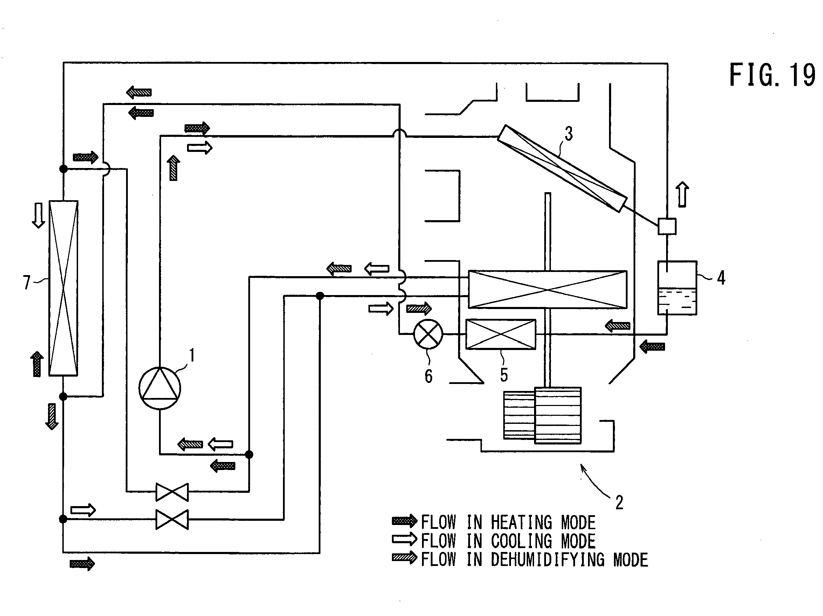

FIG. 19 is a diagram illustrating the vehicular air conditioning apparatus disclosed in Japanese Laid-Open Patent Publication No. 2009-023564.

### Description of Embodiments

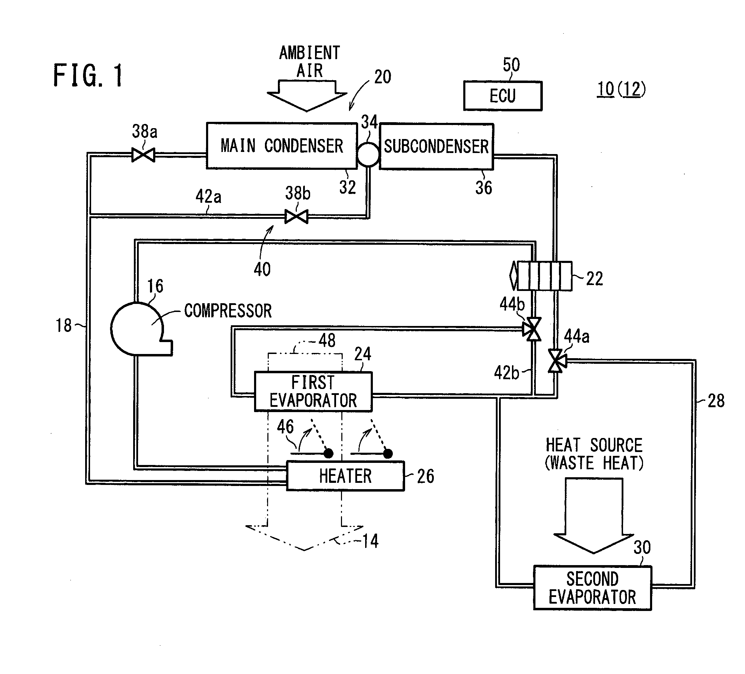

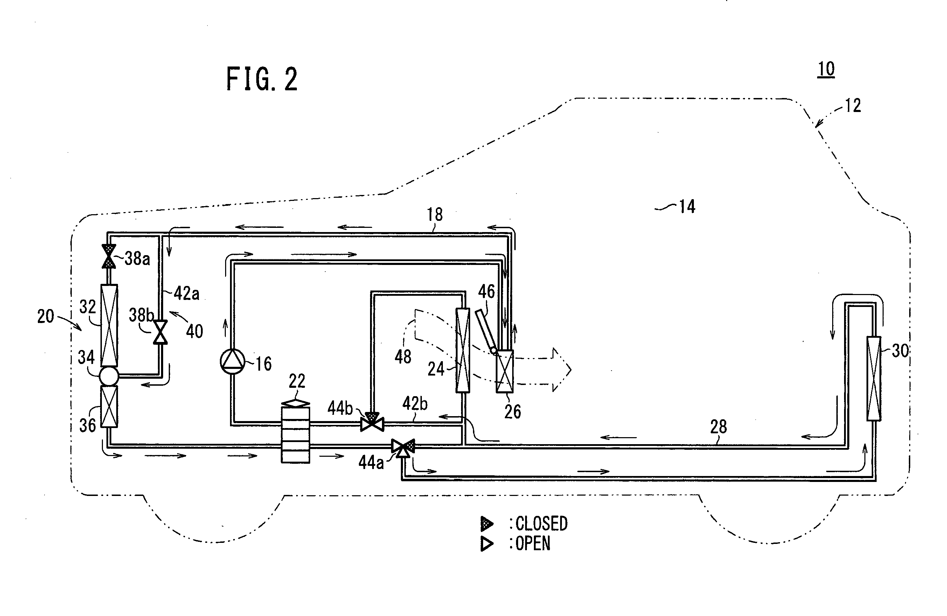

As shown in FIGS. 1 and 2, a vehicular air conditioning system 10 according to a first embodiment of the present invention is incorporated in an automobile (vehicle) 12 for air-conditioning a passenger cabin (vehicle compartment) 14 of the automobile 12.

The air conditioning system 10 has a heat pump circulation path 18 for circulating a refrigerant via a compressor 16. The heat pump circulation path 18 includes therein a condenser unit (condenser) 20 for performing heat exchange between the refrigerant and ambient air, an expansion valve 22 for depressurizing the refrigerant delivered from the condenser unit 20, a first evaporator (evaporator) 24 for performing heat exchange between the refrigerant that has passed through the expansion valve 22 and air-conditioning air, and a heater 26 for performing heat exchange between the refrigerant delivered from the compressor 16 and the air-conditioning air that has passed through the first evaporator 24.

The heat pump circulation path 18 branches into a branch path 28, which includes a second evaporator (rear evaporator) 30 for performing heat exchange between a heat medium discharged from the cabin 14 (waste heat gas from the cabin 14) and the refrigerant.

Since the heating medium used for heat exchange in the second evaporator 30 is an exhaust heat gas from the cabin 14, heat that is carried in the cabin 14 can effectively be utilized without being abandoned. When the air conditioning system 10 is activated for warming the cabin 14, heat used to warm the cabin 14 is retrieved and introduced again into the air conditioning system 10. Therefore, the air conditioning system 10 can be started up quickly.

The condenser unit 20 includes a main condenser (condensing device) 32, a gas-liquid separation refrigerant storage unit (subcooling tank) 34, and a subcondenser (supercooling heat exchanger) 36, which are connected mutually in series downstream of the heater 26, and through which the refrigerant flows in a cooling mode. A solenoid-operated valve 38a is disposed upstream of the main condenser 32.

A bypass means 40 is connected to the heat pump circulation path 18 for connecting the heater 26 to the gas-liquid separation refrigerant storage unit 34 and the subcondenser 36 in bypassing relation to the main condenser 32 in a heating mode. The bypass means 40 includes a first bypass path 42a, which branches from the heat pump circulation path 18 and is connected to the gas-liquid separation refrigerant storage unit 34 of the condenser unit 20. The first bypass path 42a includes a solenoid-operated valve 38b.

The expansion valve 22 includes a means (not shown) for detecting the temperature of the refrigerant delivered from the first evaporator 24, which cools the air-conditioning air. An opening of the expansion valve 22 is variable automatically depending on the temperature of the refrigerant delivered from the first evaporator 24, for thereby varying the flow rate of the refrigerant.

The heat pump circulation path 18 also includes a three-way valve 44a at a junction between a portion of a path near the expansion valve 22 and an inlet of the branch path 28. The heat pump circulation path 18 further includes a three-way valve 44b at a junction between an outlet of a second bypass path 42b, which bypasses the first evaporator 24, and the heat pump circulation path 18. The second evaporator 30 is disposed in a rear portion of the automobile 12 (see FIG. 2).

### timfyt2139

Between the first evaporator 24 and the heater 26, there is disposed an air mixing damper 46 for introducing air-conditioning air, having been cooled by the first evaporator 24, into the cabin 14 in bypassing relation to the heater 26.

The automobile 12 has an ambient air inlet 48 for introducing ambient air as the air-conditioning air. The first evaporator 24 and the heater 26 are successively disposed in this order downstream of the ambient air inlet 48. The air conditioning system 10 includes a controller (ECU) 50, which functions as a flow path switching means, for controlling the solenoid-operated valves 38a, 38b and the three-way valves 44a, 44b to switch between the heating mode and the cooling mode, and which also controls the air conditioning system 10 in its entirety (see FIG. 1).

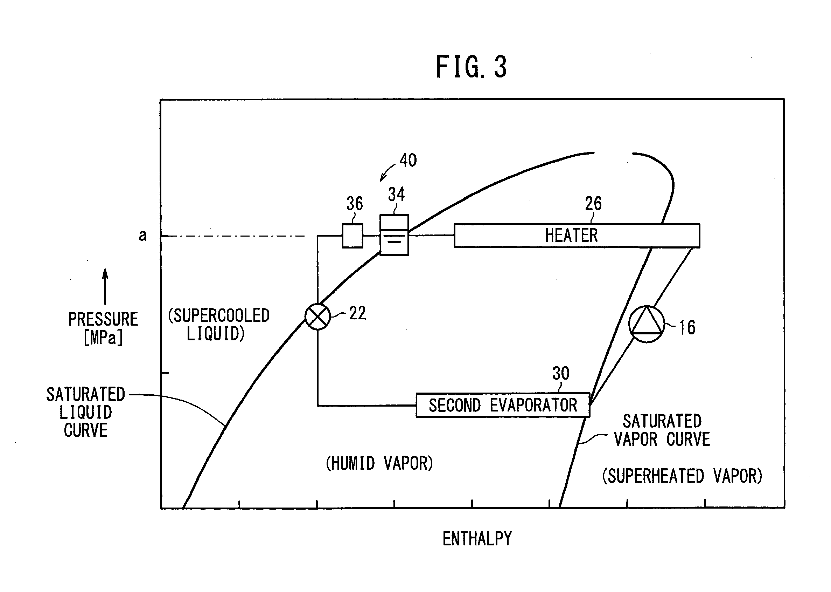

Operations of the air conditioning system 10 will be described below with reference to a cycle diagram shown in FIG. 3.

When the air conditioning system 10 operates in a heating mode, as shown in FIG. 2, the compressor 16 is actuated to deliver refrigerant into the heat pump circulation path 18. The refrigerant is supplied to the heater 26, which carries out heat exchange between the refrigerant and the air-conditioning air (radiates heat into the air-conditioning air) in order to increase the temperature of the air-conditioning air.

The solenoid-operated valve 38a is closed and the solenoid-operated valve 38b is opened, so as to allow the refrigerant, which is discharged from the heater 26, to pass through the first bypass path 42a and directly into the gas-liquid separation refrigerant storage unit 34, in bypassing relation to the main condenser 32. The refrigerant flows from the gas-liquid separation refrigerant storage unit 34 through the subcondenser 36. The subcondenser 36 cools the refrigerant and delivers the cooled refrigerant to the expansion valve 22.

The refrigerant is depressurized by the expansion valve 22 and branches through the three-way valve 44a into the branch path 28, from which the refrigerant is introduced into the second evaporator 30. The second evaporator 30 carries out heat exchange between the refrigerant and a heat source in the cabin 14. The refrigerant then bypasses the first evaporator 24 and flows back into the compressor 16 through the second bypass path 42b and the expansion valve 22.

According to the first embodiment, the main condenser 32, the gas-liquid separation refrigerant storage unit 34, and the subcondenser 36 are connected mutually in series downstream of the heater 26. The heat pump circulation path 18 includes the bypass means 40, which connects the heater 26 to the gas-liquid separation refrigerant storage unit 34 and the subcondenser 36, in bypassing relation to the main condenser 32 in the heating mode.

When the air conditioning system 10 operates in the heating mode, as shown in FIG. 2, a portion of the heat pump circulation path 18 downstream of the heater 26 is connected to the gas-liquid separation refrigerant storage unit 34 and the subcondenser 36 in bypassing relation to the main condenser 32. The gas-liquid separation refrigerant storage unit 34 and the subcondenser thus function respectively as subcooling tanks (see the gas-liquid separation refrigerant storage unit 34 and the subcondenser 36 in FIG. 3).

The refrigerant can thus be introduced as a perfect liquid medium into the expansion valve 22, whereby the expansion valve 22 is effectively prevented from trapping gas therein. Therefore, the heat pump circulation path 18 is capable of stably circulating the refrigerant, thereby easily increasing air-conditioning performance and maintaining the air-conditioning performance favorably.

The gas-liquid separation refrigerant storage unit 34 is used as a subcooling tank. Consequently, the gas-liquid separation refrigerant storage unit 34 can provide a sufficient amount of refrigerant, making it possible to prevent air-conditioning performance from being lowered due to a shortage of refrigerant when the air conditioning system 10 operates in the heating mode at an increased ambient air temperature, as well as when the air conditioning system 10 operates in a transient mode such as a dehumidifying heating mode.

According to the first embodiment, furthermore, there is no need to provide a subcooling tank and a subcooler for use only in the heating mode, because the gas-liquid separation refrigerant storage unit 34 and the subcondenser 36 of the condenser unit 20, which as described later serves as a heat radiator in the cooling mode, can be shared with the heating mode. Since there are no devices that are used only in the heating mode, the system installation space in the front portion of the vehicle that incorporates the air conditioning system 10 therein is effectively reduced.

Consequently, by stably circulating the refrigerant with a simple and economical arrangement, it is possible to increase the heat exchange efficiency and to maintain good air-conditioning performance.

Operations of the air conditioning system 10 in the dehumidifying heating mode will be described below.

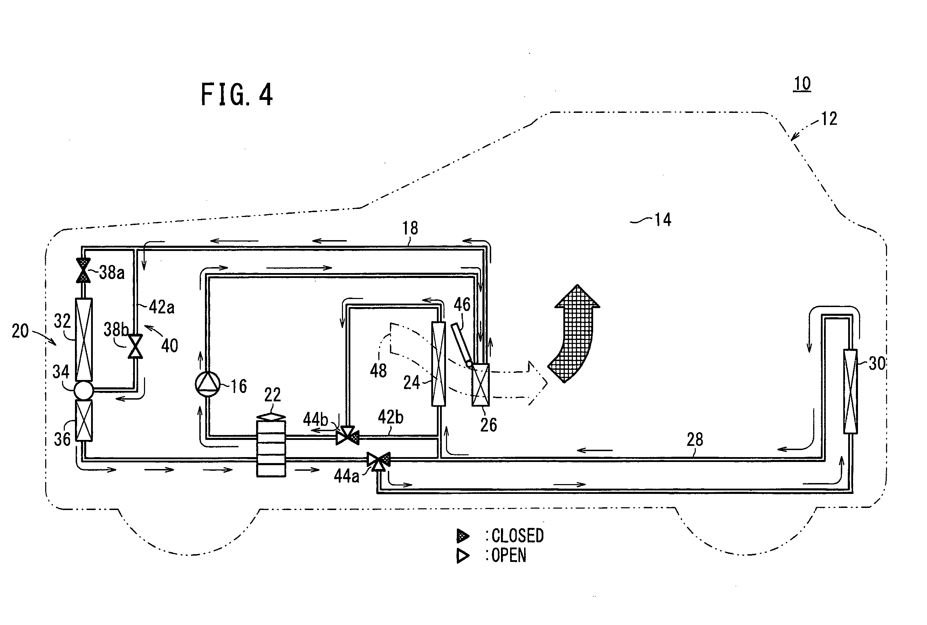

When the air conditioning system 10 operates in the dehumidifying heating mode, as shown in FIG. 4, the three-way valve 44b is actuated in order to close the second bypass path 42b, thereby connecting the first evaporator 24 to the heat pump circulation path 18. When the compressor 16 is operated, the refrigerant delivered into the heat pump circulation path 18 flows through the heater 26, which radiates heat from the refrigerant. Thereafter, the refrigerant flows through the gas-liquid separation refrigerant storage unit 34, the subcondenser 36, and the expansion valve 22, whereupon the refrigerant becomes lower in pressure and temperature. The heat of the refrigerant is absorbed by the second evaporator 30 and thereafter the refrigerant is delivered to the first evaporator 24.

The first evaporator 24 absorbs heat from the air-conditioning air thereby cooling the air-conditioning air. Thereafter, the temperature of the air-conditioning air is increased by the heater 26 and the air-conditioning air is then introduced into the cabin 14. Since the air-conditioning air is cooled by the first evaporator 24, water vapor contained in air that is introduced from outside the automobile 12 is removed, i.e., the introduced air is dehumidified.

Even if the air-conditioning air that passes through the first evaporator 24 is low in temperature, the second evaporator 30 absorbs a sufficient amount of heat from a heat source that is discharged from the cabin 14, which is high in temperature and low in humidity, thereby heating the refrigerant that flows into the first evaporator 24. Therefore, even when the air conditioning system 10 operates in the dehumidifying heating mode, the second evaporator 30 does not freeze and is capable of operating continuously.

Since the refrigerant is supplied to the gas-liquid separation refrigerant storage unit 34, the gas-liquid separation refrigerant storage unit 34 also functions as a subcooling tank. As a result, when the refrigerant is distributed at the time that the air conditioning system 10 operates in a transient mode such as the dehumidifying heating mode, no shortage of refrigerant occurs, thus allowing the air conditioning system 10 to operate with stable air-conditioning performance.

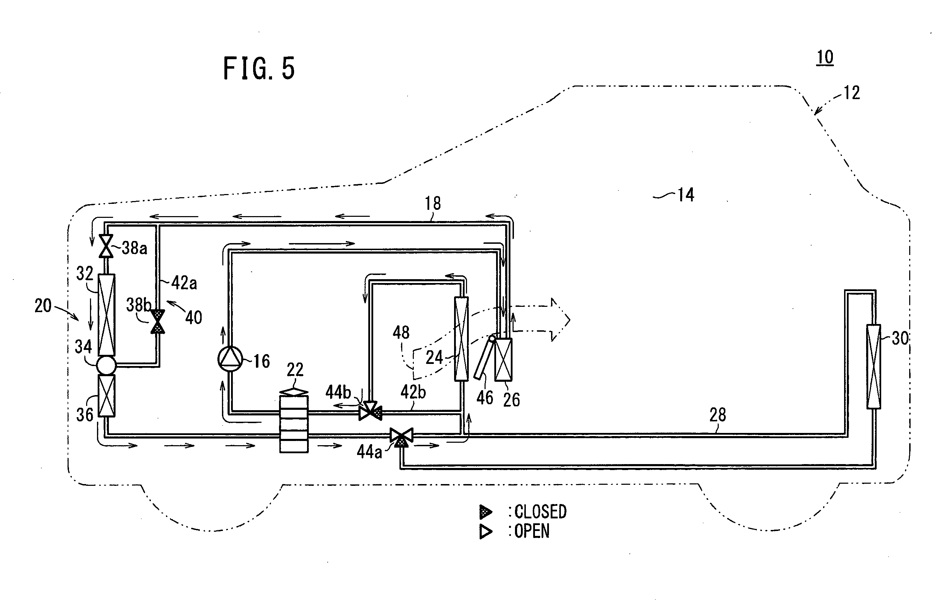

FIG. 5 shows the manner in which the vehicular air conditioning system 10 operates in the cooling mode.

When the air conditioning system 10 is operated in the cooling mode, the solenoid-operated valve 38a is opened and the solenoid-operated valve 38b is closed, whereby the condenser unit 20 is connected to the heat pump circulation path 18. The three-way valves 44a, 44b are switched in order to disconnect the branch path 28 from the heat pump circulation path 18, and to connect the first evaporator 24 to the heat pump circulation path 18. The air mixing damper 46 remains fully closed.

The compressor 16 is actuated in order to compress the refrigerant to a high temperature. Compressed refrigerant flows through the heater 26 and then the refrigerant is cooled by the condenser unit 20. Thereafter, the refrigerant is converted by the expansion valve 22 into a refrigerant of low temperature and low pressure, whereupon the refrigerant is supplied to the first evaporator 24. When the low-temperature refrigerant flows through the first evaporator 24, the first evaporator 24 carries out heat exchange between the refrigerant and the air-conditioning air. The air-conditioning air is cooled, and the refrigerant flows from the expansion valve 22 back into the compressor 16 after heat from the refrigerant is absorbed by the expansion valve 22.

The air-conditioning air, which has been cooled by the first evaporator 24, is not heated since the air mixing damper 46 is closed, and the air-conditioning air is introduced into the cabin 14, thereby cooling the cabin 14. In the cooling mode, the gas-liquid separation refrigerant storage unit 34 performs a dampening action so as to dampen any increase or decrease in the amount of refrigerant.

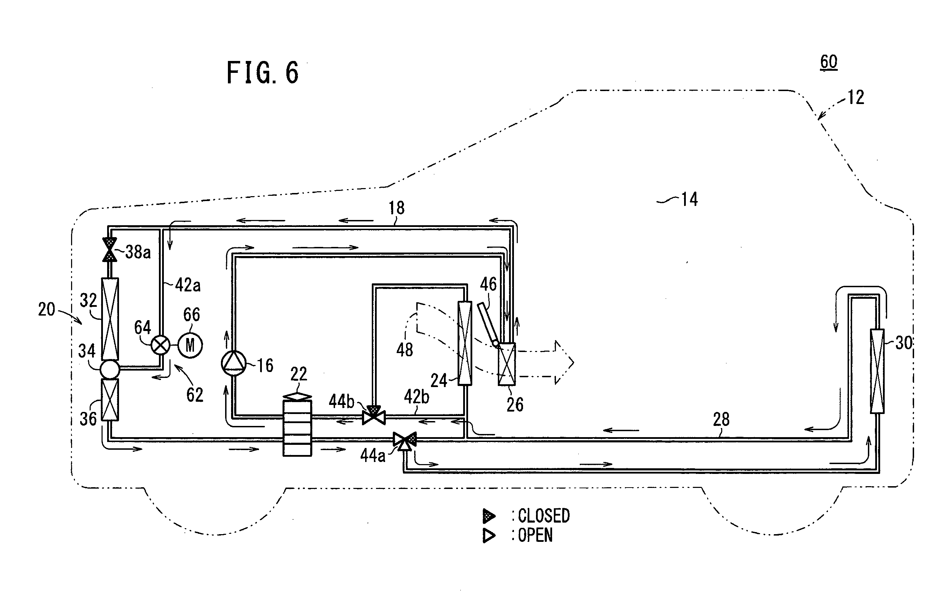

FIG. 6 is a schematic block diagram of a vehicular air conditioning system 60 according to a second embodiment of the present invention. Parts of the air conditioning system 60 according to the second embodiment, which are identical to those of the air conditioning system 10 according to the first embodiment, are denoted by identical reference characters, and such features will not be described in detail below. Similarly, parts of air conditioning systems according to later-described third through eighth embodiments of the present invention, which are identical to those of the air conditioning system 10 according to the first embodiment, are denoted by identical reference characters, and such features will not be described in detail below.

The air conditioning system 60 includes a bypass means 62 connected to the heat pump circulation path 18, for thereby connecting the heater 26 to the gas-liquid separation refrigerant storage unit 34 in bypassing relation to the main condenser 32 in the heating mode. The bypass means 62 includes the first bypass path 42a and a flow rate control valve 64, for example, a metering valve, a flow rate regulating valve, or the like, which is connected to the first bypass path 42a and serves as a pressure loss device for causing the refrigerant to undergo a pressure loss. An opening of the flow rate control valve 64 is adjusted by an actuator such as a motor 66, for example.

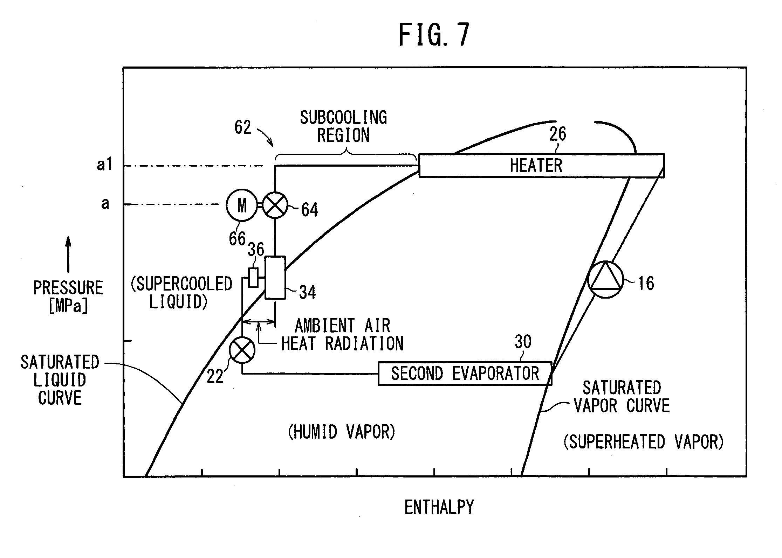

According to the second embodiment, as shown in a cycle diagram illustrated in FIG. 7, since the flow rate control valve 64 is used as a pressure loss device, the subcooling region in the heating mode can be increased. Therefore, when the ambient temperature is very low, the flow rate control valve 64 can be actuated to increase the enthalpy difference at the heater 26.

In addition, with such an increased amount of subcooling, the respective inlet temperatures of the gas-liquid separation refrigerant storage unit 34 and the subcondenser 36, which serves as a supercooling heat exchanger, can be lowered to a temperature equivalent to that of the very low ambient temperature. Therefore, heat radiation from ambient air in the supercooling heat exchanger can be held to a minimum.

Furthermore, since the amount of subcooling is increased, the capacity of the heater 26 can be increased to a higher temperature and/or higher pressure (from pressure a to pressure a1). The heating performance of the heater 26 can thus be effectively increased.

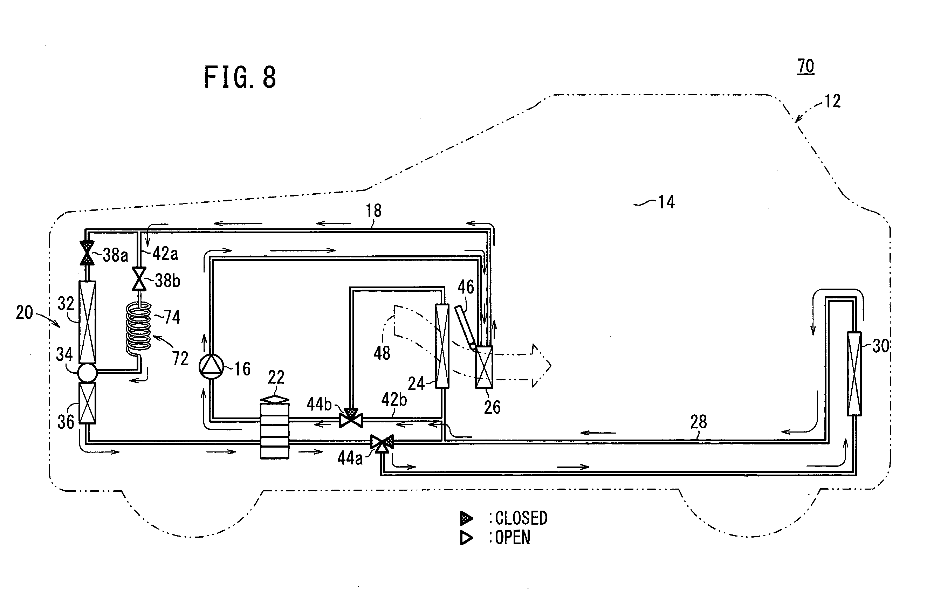

FIG. 8 is a schematic block diagram of a vehicular air conditioning system 70 according to a third embodiment of the present invention.

The air conditioning system 70 includes a bypass means 72, which is connected to the heat pump circulation path 18, for connecting the heater 26 to the gas-liquid separation refrigerant storage unit 34 in bypassing relation to the main condenser 32 in the heating mode. The bypass means 72 includes the first bypass path 42a and a capillary 74, which is connected to the first bypass path 42a and serves as a pressure loss device for causing the refrigerant to undergo a pressure loss. The solenoid-operated valve 38b is connected upstream of the capillary 74.

According to the third embodiment, since the capillary 74 is used as a pressure loss device, the same advantages as those of the second embodiment are achieved. For example, the subcooling region in the heating mode can be increased.

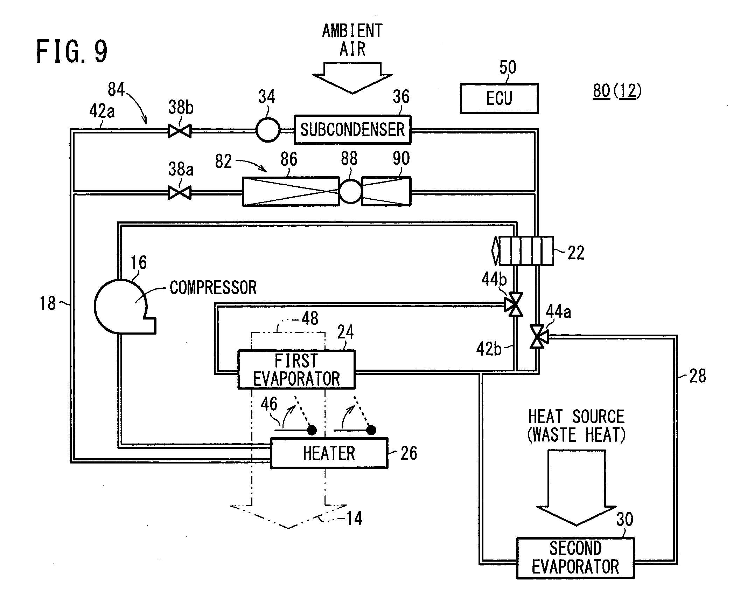

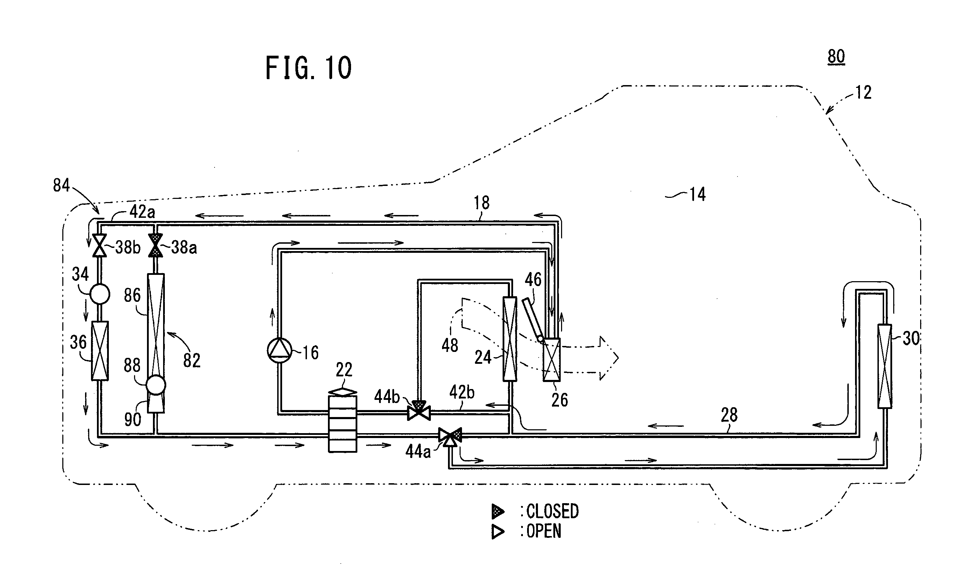

FIG. 9 is a schematic block diagram of a vehicular air conditioning system 80 according to a fourth embodiment of the present invention. FIG. 10 is a schematic diagram of the vehicular air conditioning system 80.

The air conditioning system 80 includes a condenser 82 connected to the heat pump circulation path 18 for performing heat exchange between the refrigerant and the ambient air, and a bypass means 84 connected to the heat pump circulation path 18 for connecting the heater 26 to the gas-liquid separation refrigerant storage unit 34 and the subcondenser 36 in bypassing relation to the condenser 82 in the heating mode.

The condenser 82 comprises a condensing device 86, a tank 88, and a supercooler 90, which are coupled together integrally. The solenoid-operated valve 38a is connected between the condenser 82 and the heater 26 and is positioned close to an upstream end of the condenser 82.

The bypass means 84 includes the first bypass path 42a, in which there are included the gas-liquid separation refrigerant storage unit 34, the subcondenser 36, and the solenoid-operated valve 38b.

The air conditioning system 80 operates in the same manner as shown in the cycle diagram of FIG. 3. More specifically, when the air conditioning system 80 is operated in the heating mode, as shown in FIG. 10, the compressor 16 is actuated in order to deliver refrigerant into the heat pump circulation path 18. The refrigerant is supplied to the heater 26, which carries out heat exchange between the refrigerant and the air-conditioning air (i.e., radiates heat into the air-conditioning air) so as to increase the temperature of the air-conditioning air.

Then, the solenoid-operated valve 38a is closed and the solenoid-operated valve 38b is opened in order to allow the refrigerant, having been discharged from the heater 26, to pass through the first bypass path 42a directly into the gas-liquid separation refrigerant storage unit 34 in bypassing relation to the condenser 82. The refrigerant flows from the gas-liquid separation refrigerant storage unit 34 and through the subcondenser 36, which cools the refrigerant and delivers the cooled refrigerant to the expansion valve 22.

According to the fourth embodiment, the gas-liquid separation refrigerant storage unit 34 and the subcondenser 36 are connected mutually in series through the first bypass path 42a downstream of the heater 26. The heat pump circulation path 18 includes the bypass means 84, which connects the heater 26 to the gas-liquid separation refrigerant storage unit 34 and the subcondenser 36, in bypassing relation to the condenser 82 in the heating mode.

When the air conditioning system 80 is operated in the heating mode, as shown in FIG. 10, a portion of the heat pump circulation path 18 downstream of the heater 26 is connected to the gas-liquid separation refrigerant storage unit 34 and the subcondenser 36 in bypassing relation to the condenser 82. The gas-liquid separation refrigerant storage unit 34 thus functions as a subcooling tank. When gas contained in the refrigerant supplied to the gas-liquid separation refrigerant storage unit 34 is separated from the refrigerant, a liquid refrigerant is produced through operation of the gas-liquid separation refrigerant storage unit 34. The liquid refrigerant is cooled to an ambient temperature range when the liquid refrigerant flows through the subcondenser 36.

The refrigerant can thus be introduced as a perfect liquid medium into the expansion valve 22, thereby effectively preventing gas from becoming trapped in the expansion valve 22. Therefore, the heat pump circulation path 18 is capable of stably circulating the refrigerant, thereby easily increasing air-conditioning performance and maintaining the air-conditioning performance favorably.

The gas-liquid separation refrigerant storage unit 34 is used as a subcooling tank. Consequently, the gas-liquid separation refrigerant storage unit 34 can provide a sufficient amount of refrigerant, thus making it possible to prevent air-conditioning performance from being lowered due to a shortage of refrigerant when the air conditioning system 80 operates in the heating mode at an increased ambient air temperature, as well as when the air conditioning system 80 operates in a transient mode such as a dehumidifying heating mode. Therefore, the fourth embodiment provides the same advantages as those of the first through third embodiments.

Since the subcondenser 36 can be located freely, the layout freedom of the air conditioning system 80 is effectively increased. The subcondenser 36 may be located in any position insofar as ambient air can flow through the subcondenser 36. Thus, the subcondenser 36 can be installed easily and effectively.

Operations of the air conditioning system 80 in the dehumidifying heating mode will be described below.

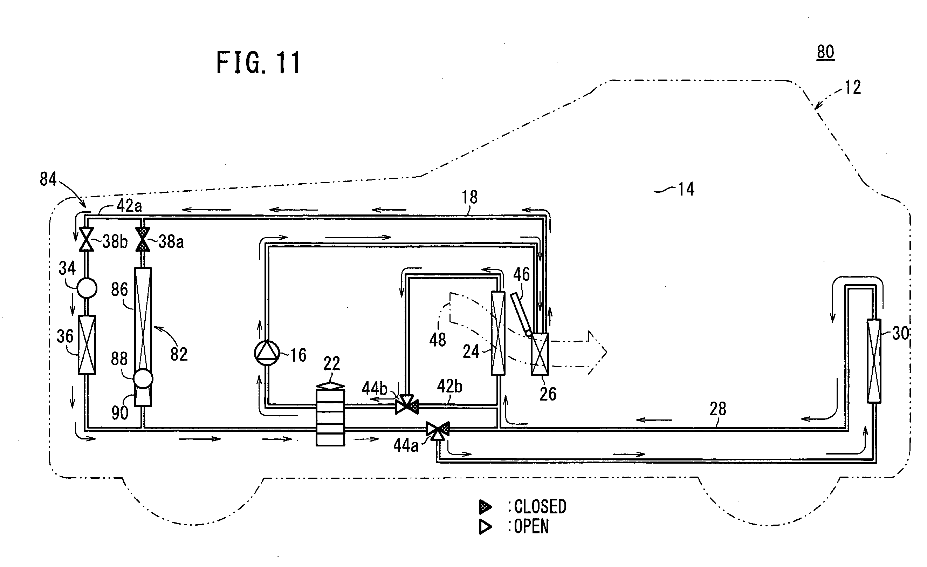

When the air conditioning system 80 is operated in the dehumidifying heating mode, as shown in FIG. 11, the three-way valve 44b is actuated in order to close the second bypass path 42b and to connect the first evaporator 24 to the heat pump circulation path 18. When the compressor 16 is operated, the refrigerant, which is delivered into the heat pump circulation path 18, flows through the heater 26. Thereafter, the refrigerant flows through the gas-liquid separation refrigerant storage unit 34, the subcondenser 36, and the expansion valve 22, whereupon the refrigerant is lowered in pressure and temperature. Heat of the refrigerant is absorbed by the second evaporator 30, and thereafter, the refrigerant is delivered to the first evaporator 24.

The first evaporator 24 absorbs heat from the air-conditioning air in order to cool the air-conditioning air. Thereafter, the temperature of the air-conditioning air is increased by the heater 26, and then the air-conditioning air is introduced into the cabin 14. Since the air-conditioning air is cooled by the first evaporator 24, water vapor contained in air that is introduced from outside the automobile 12 is removed, i.e., the air introduced into the automobile 12 is dehumidified.

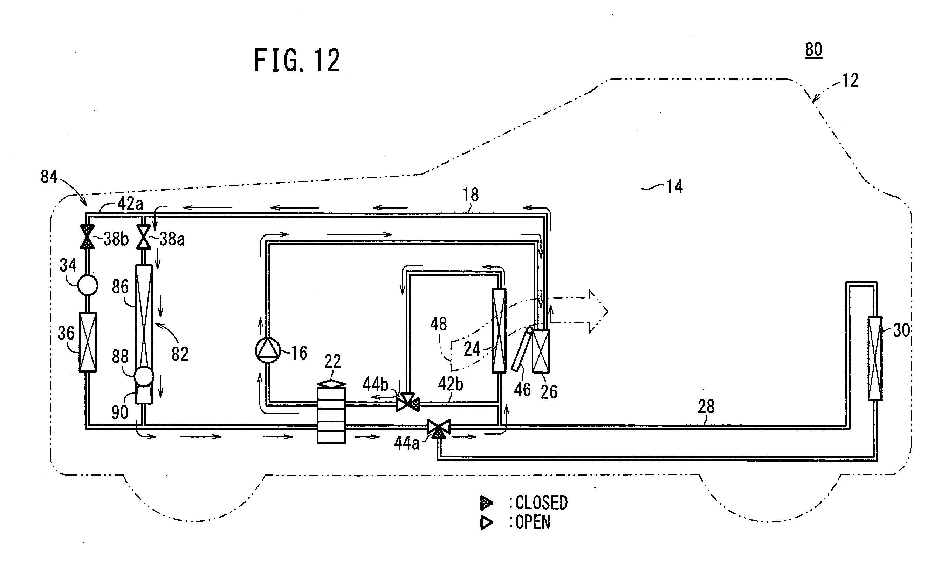

FIG. 12 shows the manner in which the vehicular air conditioning system 80 operates in the cooling mode.

When the air conditioning system 80 is operated in the cooling mode, the solenoid-operated valve 38a is opened and the solenoid-operated valve 38b is closed, thereby connecting the condenser 82 to the heat pump circulation path 18. The three-way valves 44a, 44b are switched in order to disconnect the branch path 28 from the heat pump circulation path 18 and to connect the first evaporator 24 to the heat pump circulation path 18. The air mixing damper 46 remains fully closed.

The compressor 16 is actuated in order to compress the refrigerant to a high temperature. Compressed refrigerant flows through the heater 26 and then the refrigerant is cooled by the condenser 82. Thereafter, the refrigerant is converted by the expansion valve 22 into a refrigerant of low temperature and low pressure, whereupon the refrigerant is supplied to the first evaporator 24. When the low-temperature refrigerant flows through the first evaporator 24, the first evaporator 24 carries out heat exchange between the refrigerant and the air-conditioning air. The air-conditioning air is cooled, and the refrigerant flows from the expansion valve 22 back into the compressor 16 after heat from the refrigerant is absorbed by the expansion valve 22.

The air-conditioning air, which has been cooled by the first evaporator 24, is not heated since the air mixing damper 46 is closed. The air-conditioning air is introduced into the cabin 14, thereby cooling the cabin 14. In the cooling mode, the gas-liquid separation refrigerant storage unit 34 performs a dampening action so as to dampen any increase or decrease in the amount of refrigerant.

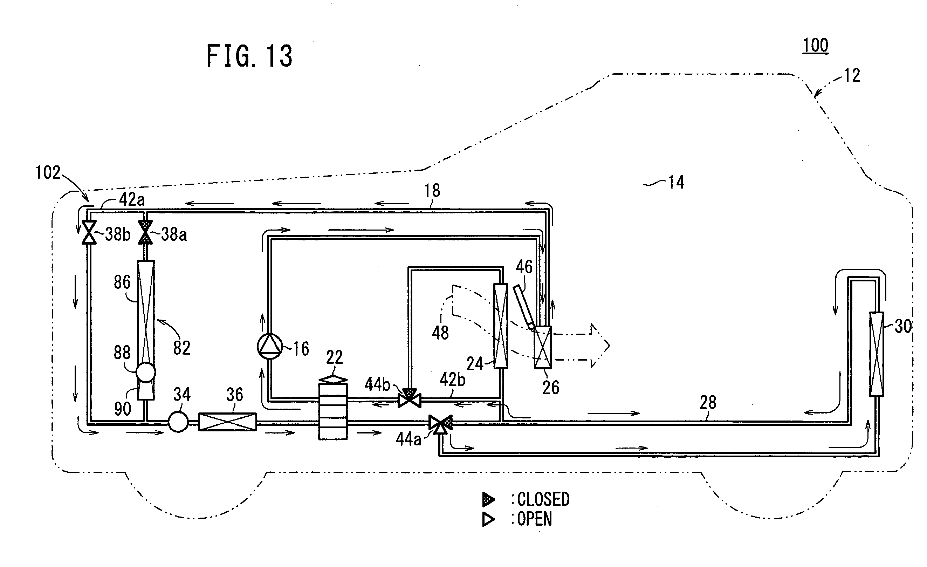

FIG. 13 is a schematic block diagram of a vehicular air conditioning system 100 according to a fifth embodiment of the present invention.

In the air conditioning system 100, a bypass means 102 is connected to the heat pump circulation path 18 for connecting the heater 26 to the gas-liquid separation refrigerant storage unit 34 and to the subcondenser 36 in bypassing relation to the condenser 82 in the heating mode. The bypass means 102 includes the first bypass path 42a, which is connected parallel to the condenser 82 and includes a solenoid-operated valve 38b.

The heat pump circulation path 18 includes the gas-liquid separation refrigerant storage unit 34 and the subcondenser 36, which are positioned between the outlet of the condenser 82 and the inlet of the expansion valve 22.

According to the fifth embodiment, when the air conditioning system 100 is operated in the heating mode, as shown in FIG. 13, the solenoid-operated valve 38a is closed and the solenoid-operated valve 38b is opened. When the compressor 16 is actuated, refrigerant is discharged from the heater 26 and flows through the first bypass path 42a directly into the gas-liquid separation refrigerant storage unit 34 in bypassing relation to the condenser 82. The refrigerant flows from the gas-liquid separation refrigerant storage unit 34 and through the subcondenser 36, which cools the refrigerant and delivers cooled refrigerant to the expansion valve 22. The gas-liquid separation refrigerant storage unit 34 thus functions as a subcooling tank. Liquid refrigerant, which is produced when gas contained in the refrigerant is separated, flows through the subcondenser 36, thereby producing a perfect liquid medium. Therefore, the heat pump circulation path 18 is capable of stably circulating the refrigerant therethrough, thereby easily increasing and maintaining good air-conditioning performance. Therefore, the fifth embodiment provides the same advantages as those of the first through fourth embodiments.

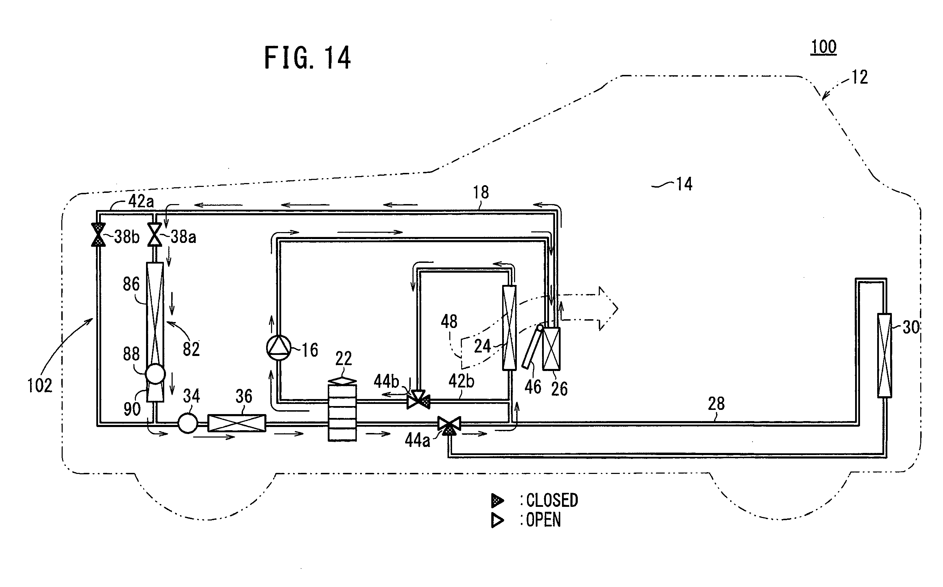

When the air conditioning system 100 is operated in the cooling mode, as shown in FIG. 14, the solenoid-operated valve 38a is opened and the solenoid-operated valve 38b is closed while the three-way valves 44a, 44b are switched. When the compressor 16 is actuated to compress the refrigerant to a high temperature, compressed refrigerant flows through the heater 26, and thereafter, the refrigerant is cooled by the condenser 82. Then, the refrigerant is converted by the subcondenser 36 and the expansion valve 22 into a refrigerant of low temperature and low pressure, whereupon the refrigerant is supplied to the first evaporator 24. In the cooling mode, therefore, similar to the heating mode, the gas-liquid separation refrigerant storage unit 34 performs a dampening action so as to dampen any increase or decrease in the amount of refrigerant.

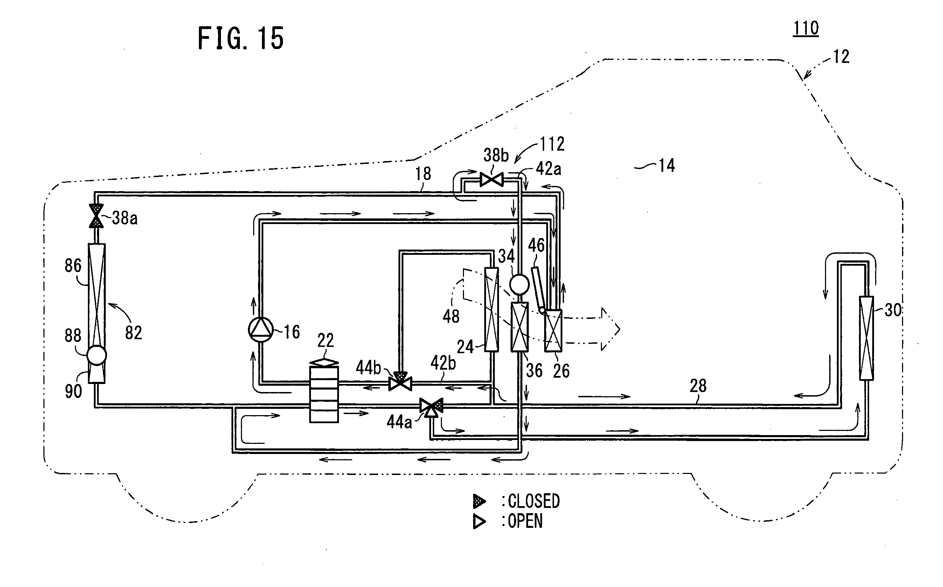

FIG. 15 is a schematic block diagram of a vehicular air conditioning system 110 according to a sixth embodiment of the present invention.

The air conditioning system 110 includes a bypass means 112 connected to the heat pump circulation path 18 for connecting the heater 26 to the gas-liquid separation refrigerant storage unit 34 in bypassing relation to the condenser 82 in the heating mode. The bypass means 112 includes the first bypass path 42a, which includes the solenoid-operated valve 38b, the gas-liquid separation refrigerant storage unit 34, and the subcondenser 36. The gas-liquid separation refrigerant storage unit 34 and the subcondenser 36 are disposed between the first evaporator 24 and the heater 26.

According to the sixth embodiment, when the air conditioning system 110 is operated in the heating mode, as shown in FIG. 15, the solenoid-operated valve 38a is closed and the solenoid-operated valve 38b is opened. When the compressor 16 is actuated, refrigerant is discharged from the heater 26 and flows through the first bypass path 42a directly into the gas-liquid separation refrigerant storage unit 34 in bypassing relation to the condenser 82. The refrigerant flows from the gas-liquid separation refrigerant storage unit 34 and through the subcondenser 36, which cools the refrigerant and delivers cooled refrigerant to the expansion valve 22.

When the air conditioning system 110 is operated in the cooling mode, the solenoid-operated valve 38a is opened and the solenoid-operated valve 38b is closed while the three-way valves 44a, 44b are switched. Upon actuation of the compressor 16 to compress the refrigerant to a high temperature, the compressed refrigerant flows through the heater 26 and then is cooled by the condenser 82.

According to the sixth embodiment, therefore, the heat pump circulation path 18 is capable of stably circulating the refrigerant, thereby easily increasing and maintaining good air-conditioning performance. Thus, the sixth embodiment provides the same advantages as those of the first through fifth embodiments.

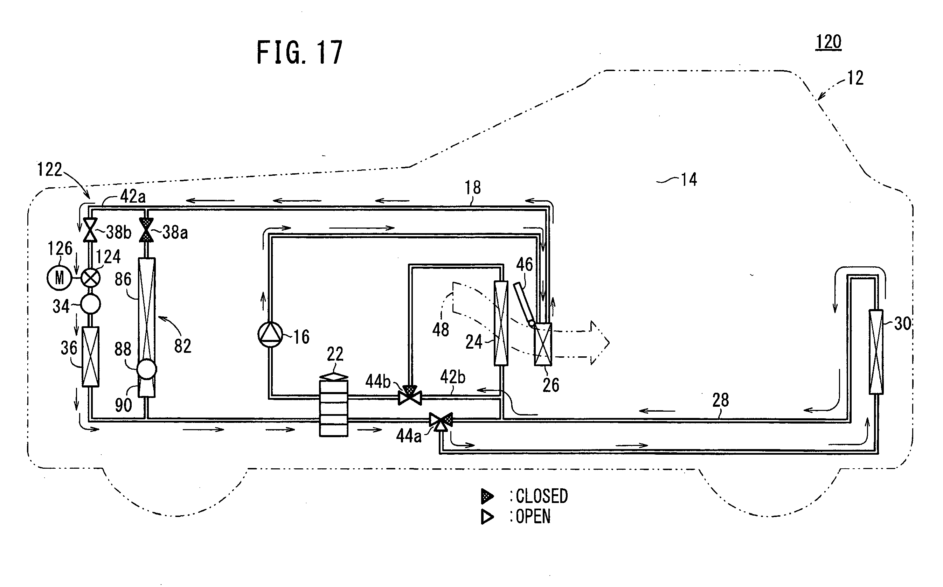

FIG. 17 is a schematic block diagram of a vehicular air conditioning system 120 according to a seventh embodiment of the present invention.

The air conditioning system 120 includes a bypass means 122 connected to the heat pump circulation path 18 for connecting the heater 26 to the gas-liquid separation refrigerant storage unit 34 and the subcondenser 36 in bypassing relation to the condenser 82 in the heating mode.

The bypass means 122 includes a flow rate control valve 124, for example, a metering valve, a flow rate regulating valve, or the like, which is connected to the first bypass path 42a and serves as a pressure loss device for causing the refrigerant to undergo a pressure loss. The opening of the flow rate control valve 124 is adjusted by an actuator such as a motor 126, for example.

According to the sixth embodiment, since the flow rate control valve 124 is used as a pressure loss device, in the same manner as the cycle diagram shown in FIG. 7, a subcooling region can be increased in the heating mode. Therefore, when the ambient temperature is very low, the flow rate control valve 64 can be actuated in order to increase the enthalpy difference at the heater 26.

In addition, due to the increased amount of subcooling, the inlet temperature of the gas-liquid separation refrigerant storage unit 34 and the subcondenser 36, which serves as a supercooling heat exchanger, can be lowered to a temperature that is equivalent to that of the very low ambient temperature. Therefore, heat radiation from ambient air in the supercooling heat exchanger can be held to a minimum.

Furthermore, since the amount of subcooling is increased, the capacity of the heater 26 can be increased to a higher temperature and/or higher pressure. The heating performance of the heater 26 can thus be effectively increased.

In essential features thereof, the seventh embodiment is based on the fourth embodiment. However, the seventh embodiment is not strictly limited to the fourth embodiment, but may be based on the fifth embodiment or the sixth embodiment. The same also applies to the eighth embodiment, as described below.

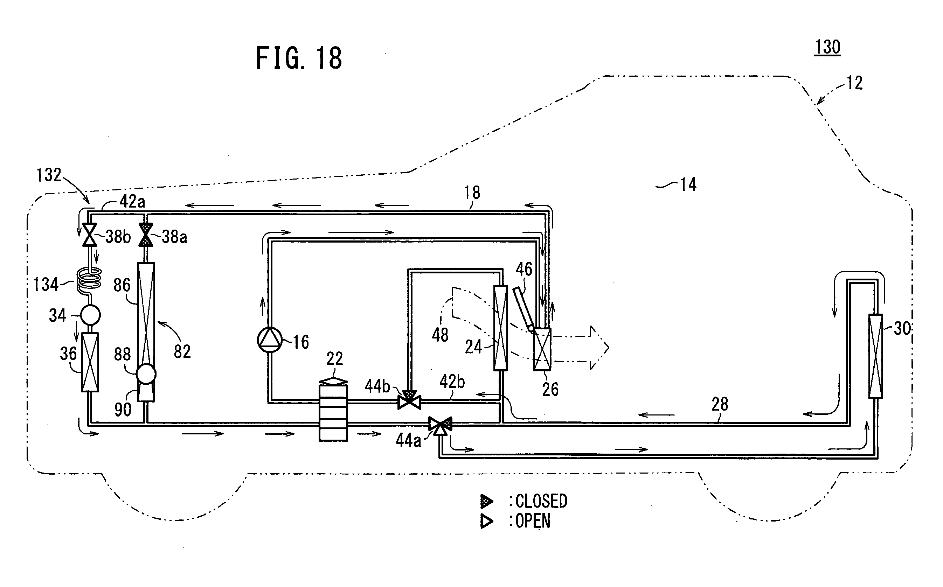

FIG. 18 is a schematic block diagram of a vehicular air conditioning system 130 according to an eighth embodiment of the present invention.

The air conditioning system 130 includes a bypass means 132 connected to the heat pump circulation path 18 for connecting the heater 26 to the gas-liquid separation refrigerant storage unit 34 and the subcondenser 36 in bypassing relation to the condenser 82 in the heating mode. The bypass means 72 includes a capillary 134, which is connected to the first bypass path 42a and serves as a pressure loss device for causing the refrigerant to undergo a pressure loss. The solenoid-operated valve 38b is disposed upstream of the capillary 134, whereas the gas-liquid separation refrigerant storage unit 34 and the subcondenser 36 are disposed downstream of the capillary 134.

According to the eighth embodiment, since the capillary 134 is used as a pressure loss device, the same advantages as those of the seventh embodiment are achieved. For example, the subcooling region in the heating mode can be increased.

In each of the above embodiments, the heat medium, which undergoes heat exchange with the refrigerant in the second evaporator 30, may be, aside from the waste heat gas from the cabin 14, any medium that is higher in temperature than the refrigerant flowing into the second evaporator 30, e.g., a medium carrying heat from the motor, heat from the battery, heat from an internal combustion engine assuming the vehicle has an internal combustion engine, heat from the controller 50, or heat from ambient air, etc.

The three-way valves 44a, 44b for switching between flow paths may be formed from a combination of a branch block and a solenoid-operated valve for switching between flow paths, instead of an integral assembly of a three-way branch and a valve mechanism.

## Claims

1. A vehicular air conditioning system of a heat pump type comprising:
a condenser (32) for performing heat exchange between a refrigerant and ambient air, the condenser (32) being connected to a heat pump circulation path (18) for circulating the refrigerant with a compressor (16);
an evaporator (24) connected to the heat pump circulation path (18) for performing heat exchange between the refrigerant and air-conditioning air; and
a heater (26) connected to the heat pump circulation path (18) for performing heat exchange between the refrigerant, which has been delivered from the compressor (16), and the air-conditioning air that has passed through the evaporator (24);
the vehicular air conditioning system being **characterized in that** it further comprises a first bypass valve (38a) which is disposed upstream of the condenser (32);
a gas-liquid separation refrigerant storage unit (34);
a supercooling heat exchanger (36); and
bypass means (40, 62) connecting the gas-liquid separation refrigerant storage unit (34) and the supercooling heat exchanger (36) downstream of the heater (26) in bypassing relation to the condenser (32) in a heating mode, wherein the bypass means (40) includes a bypass path (42a), which branches from the heat pump circulation path (18) and is connected to the gas-liquid separation refrigerant storage unit (34), wherein the first bypass path (42a) includes a second bypass valve (38b);
wherein in the heating mode, the first bypass valve (38a) is closed and the second bypass valve (38b) is opened.

2. The vehicular air conditioning system according to claim 1, further comprising:
a rear evaporator (30) connected to a branch path (28), which branches from the heat pump circulation path (18), for performing heat exchange between the refrigerant and a heating medium, which is obtained from inside or outside of a vehicle (12), and which is higher in temperature than the refrigerant.

3. The vehicular air conditioning system according to claim 2, wherein the heating medium, which exchanges heat with the refrigerant in the rear evaporator (30), comprises waste heat gas from a cabin (14).

4. The vehicular air conditioning system according to claim 1, further comprising an expansion valve (22) for depressurizing the refrigerant delivered from the condenser (32).

5. The vehicular air conditioning system according to any one of claims 1 through 3, wherein a condenser unit (20) comprises the condenser (32), the gas-liquid separation refrigerant storage unit (34), and the supercooling heat exchanger (36), which are connected mutually in series downstream of the heater (26), and through which the refrigerant flows in a cooling mode.

6. The vehicular air conditioning system according to claim 1, wherein the bypass means (62) comprises a pressure loss device (64) for causing the refrigerant to undergo a pressure loss.

## Patentansprüche

1. Fahrzeug-Klimatisierungssystem vom Typ einer Wärmepumpe, umfassend:
einen Verflüssiger (32) zum Durchführen eines Wärmetauschens zwischen einem Kältemittel und Umgebungsluft, wobei der Verflüssiger (32) mit einem Wärmepumpe-Zirkulationsleitungssystem (18) zum Zirkulieren des Kältemittels mit einem Kompressor (16) verbunden ist;
einen Verdampfer (24), welcher mit dem Wärmepumpe-Zirkulationsleitungssystem (18) verbunden ist, zum Durchführen eines Wärmetauschens zwischen dem Kältemittel und Klimatisierungs-Luft; und
ein Heizelement (26), welches mit dem Wärmepumpe-Zirkulationsleitungssystem (18) verbunden ist, zum Durchführen eines Wärmetauschens zwischen dem Kältemittel, welches von dem Kompressor (16) geliefert worden ist, und der Klimatisierungs-Luft, welche den Verdampfer (24) durchlaufen hat;
wobei das Fahrzeug-Klimatisierungssystem **dadurch gekennzeichnet ist, dass** es ferner umfasst:
ein erstes Umgehungs-Ventil (38a), welches stromaufwärts von dem Verflüssiger (32) angeordnet ist;
eine Gas-Flüssigkeit-Separations-Kühlmittelspeicher-Einheit (34);
einen Unterkühlungs-Wärmetauscher (36); und
Umgehungsmittel (40, 62), welche die Gas-Flüssigkeit-Separations-Kühlmittelspeicher-Einheit (34) und den Unterkühlungs-Wärmetauscher (36) stromabwärts der Heizeinheit (26) in umgehender Beziehung zu dem Verflüssiger (32) in einem Heizmodus verbinden,
wobei die Umgehungsmittel (40) eine Umgehungsleitung (42a) umfassen, welche von dem Wärmepumpe-Zirkulationsleitungssystem (18) abzweigt und mit der Gas-Flüssigkeit-Separations-Kühlmittelspeicher-Einheit (34) verbunden ist, wobei die erste Umgehungsleitung (42a) ein zweites Umgehungs-Ventil (38b) umfasst;
wobei in dem Heizmodus das erste Umgehungs-Ventil (38a) geschlossen ist und das zweite Umgehungs-Ventil (38b) geöffnet ist.

2. Fahrzeug-Klimatisierungssystem nach Anspruch 1, ferner umfassend:
einen hinteren Verdampfer (30), welcher mit einer Abzweigungs-Leitung (28) verbunden ist, welche von dem Wärmepumpe-Zirkulationsleitungssystem (18) abzweigt, zum Durchführen eines Wärmetauschens zwischen dem Kältemittel und einem Heizmedium, welches von innerhalb oder außerhalb des Fahrzeugs (12) erhalten wird, und welches von einer höheren Temperatur als als Kältemittel ist.

3. Fahrzeug-Klimatisierungssystem nach Anspruch 2, wobei das Heizmedium, welches Wärme mit dem Kältemittel in dem hinteren Verdampfer (30) tauscht, Abwärme-Gas aus dem Fahrgastraum (14) umfasst.

4. Fahrzeug-Klimatisierungssystem nach Anspruch 1, ferner umfassend ein Expansions-Ventil (22) zum Vermindern eines Drucks des von dem Verflüssiger (32) gelieferten Kältemittels.

5. Fahrzeug-Klimatisierungssystem nach einem der Ansprüche 1 bis 3, wobei eine Verflüssiger-Einheit (20) den Verflüssiger (32), die Gas-Flüssigkeit-Separations-Kältemittelspeicher-Einheit (34) und den Unterkühlungs-Wärmetauscher (36) umfasst, welche gegenseitig in Reihe stromabwärts des Heizelements (26) verbunden sind, und durch welche das Kältemittel in einem Kühlmodus fließt.

6. Fahrzeug-Klimatisierungssystem nach Anspruch 1, wobei die Umgehungsmittel (62) eine Druckverminderungs-Vorrichtung (64) umfassen, welche das Kältemittel dazu veranlasst, einen Druckverlust zu erfahren.

## Revendications

1. Système de climatisation pour véhicule du type à pompe à chaleur, comprenant:
un condenseur (32) afin de réaliser un échange thermique entre un réfrigérant et l'air ambiant, le condenseur (32) étant connecté à un chemin de circulation de pompe à chaleur (18) pour faire circuler le réfrigérant avec un compresseur (16);
un évaporateur (24) qui est connecté au chemin de circulation de pompe à chaleur (18) afin de réaliser un échange de chaleur entre le réfrigérant et l'air de conditionnement d'air; et
un dispositif de chauffage (26) qui est connecté au chemin de circulation de pompe à chaleur (18) afin de réaliser un échange de chaleur entre le réfrigérant, qui a été délivré par le compresseur (16), et l'air de conditionnement d'air qui est passé à travers l'évaporateur (24);
le système de climatisation pour véhicule étant **caractérisé en ce qu'**il comprend en outre:
une premier clapet de dérivation (38a) qui est disposé en amont du condenseur (32);
une unité de stockage de réfrigérant de séparation gaz - liquide (34);
un échangeur de chaleur de super-refroidissement (36); et
des moyens de dérivation (40, 62) qui relient l'unité de stockage de réfrigérant de séparation gaz - liquide (34) et l'échangeur de chaleur de super-refroidissement (36) en aval du dispositif de chauffage (26) dans une relation de dérivation vers le condenseur (32) dans un mode de chauffage, dans lequel les moyens de dérivation (40) comprennent un chemin de dérivation (42a), qui se ramifie à partir du chemin de circulation de pompe à chaleur (18) et qui est connecté à l'unité de stockage de réfrigérant de séparation gaz -liquide (34), dans lequel le premier chemin de dérivation (42a) comprend un deuxième clapet de dérivation (38b),
dans lequel, dans le mode de chauffage, le premier clapet de dérivation (38a) est fermé, et le deuxième clapet de dérivation (38b) est ouvert.

2. Système de climatisation pour véhicule selon la revendication 1, comprenant en outre:
un évaporateur arrière (30) connecté à une ramification (28), qui se ramifie à partir du chemin de circulation de pompe à chaleur (18), afin d'exécuter un échange de chaleur entre le réfrigérant et un milieu chauffant, qui est obtenu depuis l'intérieur ou depuis l'extérieur d'un véhicule (12), et dont la température est supérieure à celle du réfrigérant.

3. Système de climatisation pour véhicule selon la revendication 2, dans lequel le milieu chauffant, qui échange de la chaleur avec le réfrigérant dans l'évaporateur arrière (30), comprend un gaz de chaleur perdue en provenance d'une cabine (14).

4. Système de climatisation pour véhicule selon la revendication 1, comprenant en outre une soupape de détente (22) pour dépressuriser le réfrigérant délivré par le condenseur (32).

5. Système de climatisation pour véhicule selon l'une quelconque des revendications 1 à 3, dans lequel une unité de condenseur (20) comprend le condenseur (32), l'unité de stockage de réfrigérant de séparation gaz - liquide (34), et l'échangeur de chaleur de super-refroidissement (36) qui sont connectés mutuellement en série en aval du dispositif de chauffage (26), et à travers lesquels le réfrigérant s'écoule dans un mode de refroidissement.

6. Système de climatisation pour véhicule selon la revendication 1, dans lequel les moyens de dérivation (62) comprennent un dispositif de perte de pression (64) pour entraîner le réfrigérant à subir une perte de pression.
